# EUROPEAN PATENT APPLICATION

(11) **EP 2 216 627 A1**
(43) Date of publication of application: **11.08.2010**
(21) Application number: 09305117.5
(22) Date of filing: 09.02.2009
(51) Int. Cl.: G01D 4/00, G07F 15/00, H04Q 9/02

(54) **A method of registering a utility meter, corresponding device, storage means, and software program therefor**

(71) Applicant: Alcatel Lucent, 75008 Paris (FR)
(72) Inventor: Ahmadi, Bashir, 12349, Berlin (DE)
(74) Representative: Nicolle, Olivier

(57) **Abstract**

The invention concerns a method of registering a utility meter by a utility consumer, the method comprising the steps of establishing a data connection between the utility meter and a utility provider and enabling (104) a delivery of a utility, wherein the utility meter is uniquely identified by means of a meter identifier and the step of establishing the data connection comprises assembling (101) a registration message comprising the meter identifier and a customer identifier, transmitting (102) the registration message to the utility provider, and receiving (103) a confirmation message from the utility provider. The invention further concerns a corresponding device, storage means, and software program therefor.

## Description

The invention relates to a method of registering a utility meter according to the preamble of claim 1, a programmable utility meter according to the preamble of claim 6, and storage means according to the preamble of claim 10.

By a smart meter is meant a type of advanced meter, such as an electrical meter, that identifies consumption in more detail than a conventional meter and optionally, but generally, communicates that information via some network back to a local utility for monitoring and billing purposes. The method of remotely measuring and reporting consumption is also known as telemetering. The term "smart meter" often refers to an electrical meter, but in this context is meant to refer to any utility such as, inter alia, electrical energy, natural gas, and water consumption. Smart Meters are commonly believed to be a less costly alternative to traditional interval or time-of-use meters and are intended to be used on a wide scale with all customer classes, including residential customers.

Recently, a number of initiatives have evolved that aim to establish a standardized platform for smart meters to be shared among utility providers. One such initiative is the non-profit organization digitalSTROM Alliance founded by the Swiss Federal Institute of Technology in Zurich, Switzerland. Another is the task force "Smart Metering", which is currently formed by the Association for Electrical, Electronic, and Information Technologies (VDE) in Frankfurt, Germany. The European Smart Metering Industry Group (ESMIG) and European Telecommunications Standards Institute (ETSI) both pursue the same goal of developing a European standard for smart meters. Eventually, at least one of these bodies may be expected to present a specification that will gain recognition across the industry.

Since smart metering is a relatively new technology, in spite of the above-mentioned standardization initiatives, a universal process for deploying and registering smart meters with a supplier has not yet been established. For the time being, it is common practice for both first installations and supplier changes to dispatch a field technician or field engineer to the customer's premises to perform the registration. This practice is described in the article "Preparing for Smart Meter Rollout" by Simon Morris, available from the Internet website "www.utilityproducts.com".

A downside of the conventional practice is the required commitment of a field technician to perform the meter registration on site. This requirement imposes additional workload on the field technician and thus reduces the cost efficiency of the utility provider. It is thus an object of the invention to provide an approach to meter registration that enables the customer to register a utility meter without support by service personnel of the utility provider.

This object is achieved by a method according to claim 1, a programmable utility meter according to claim 6, and storage means according to claim 10.

A main idea of the invention is to automate the registration of the meter by exchanging a registration message and a confirmation message between customer and provider.

Further developments of the invention can be gathered from the dependent claims and the following description.

In the following the invention will be explained further making reference to the attached drawing.

To register a utility meter according to an embodiment of the invention, the utility meter is uniquely identified by means of a meter identifier. To establish a data connection between the utility meter and a utility provider, the consumer assembles a registration message comprising the meter identifier and a customer identifier, transmits the registration message to the utility provider, and receives a confirmation message from the utility provider. Further, the consumer enables a delivery of a utility.

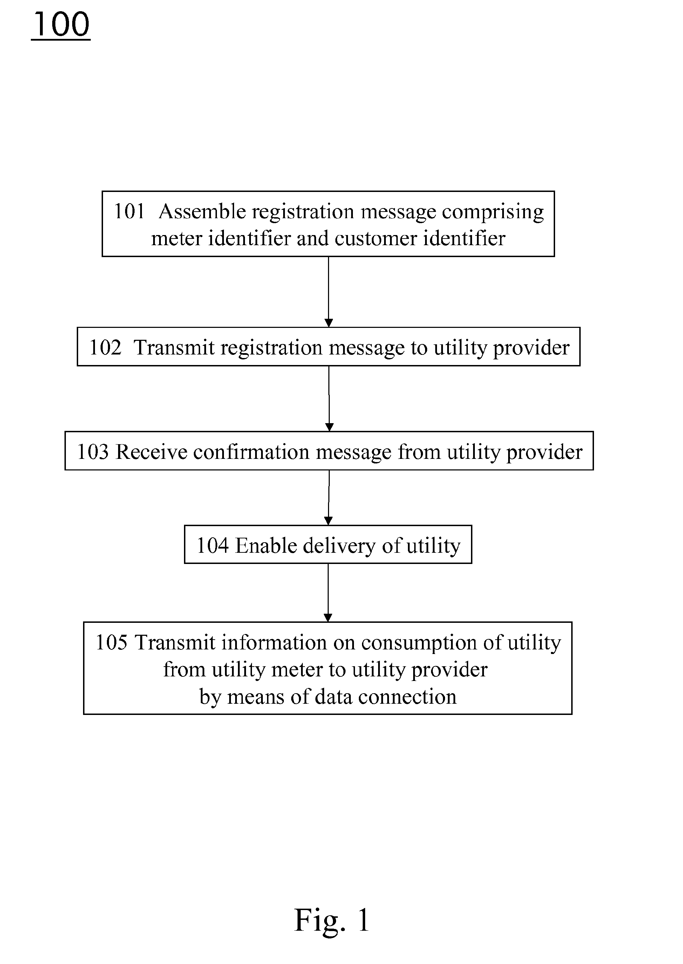

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, a third step 103, a fourth step 104, and a fifth step 105, mutually connected by arrows indicating a preferred order of execution.

In the first step 101, the consumer assembles a registration message comprising a meter identifier and a customer identifier. To allow for an unambiguous assignment of meter identifiers, the meter identifier is attached to the utility meter by a meter vendor, for example, in the form of an adhesive label. In an alternative embodiment, the meter identifier may be stored within the utility meter itself, which could then be configured to display the meter identifier to the consumer, for example, by means of a liquid crystal display (LCD).

To allow for a unique assignment, the customer identifier has been generated by the utility provider, for example, as a serial customer number. In an alternative embodiment, a name of the customer or any other unambiguous character string may be used as the customer identifier. To allow the utility meter to read the customer identifier, the customer identifier is provided stored on a storage medium such as a smart card. By smart card, sometimes called chip card or integrated circuit card (ICC), is meant any pocket-sized card with embedded integrated circuits capable of storing the customer identifier. To the same end, the utility meter is equipped with a smart card reader, that is, an electronic device that reads smart cards. In order to enable the use of off-the-shelf components, the smart card reader and smart card conform to the ISO/IEC 7816 and ISO/IEC 7810 series of standards.

To add tamper-resistant properties to the smart card, it may be equipped with a secure cryptoprocessor, that is, a dedicated microprocessor for carrying out cryptographic operations, embedded in a packaging with multiple physical security measures. An additional benefit of this approach is the ability to use the smart card for both identification and authentication of the customer. For this purpose, the utility meter makes use of a PKCS#11 cryptographic library provided by the smart card vendor. To ensure a sufficient key length, the smart card makes use of the Triple DES (3DES) or RSA cryptographic algorithms.

In order to ensure a uniform data acquisition across all customers, a registration form supplied by the utility provider is used as a media for the registration message. When assembling the registration message, the consumer thus enters the meter identifier and the customer identifier into the respective form fields provided by the registration form. To integrate the contracting and registration process, the registration form may be part of a signed contract between the customer and utility provider.

In the second step 102, the consumer transmits the registration message assembled in the first step 101 to the utility provider. In the embodiment at hand, the transmission is effected simply by mailing the completed registration form. To reduce transit time and avoid the need for paper-based processing, an alternative embodiment makes use of a customer portal, that is, a personalized website supplied by the utility provider in Hypertext Markup Language (HTML). Here, instead of filling out the paper-based registration form, the customer completes a web-based form to assemble the registration message. Once the form is complete, the customer may submit its contents to the utility provider, effectively transmitting the registration message by means of the Hypertext Transport Protocol (HTTP).

Still another embodiment, to further integrate the end-to-end registration process, employs the built-in smart card reader of the utility meter. In this case, the customer identifier is read from the smart card along with a destination network address of the utility provider. To allow the utility meter to transmit the registration message to this destination address without human intervention, the utility meter is further coupled to the utility provider by means of a computer network such as a smart grid. By a smart grid is meant an automated integrated energy and information delivery network characterized by a two-way flow of electricity and information. An example of a smart grid is described in the report "The Smart Grid: An Introduction" by the United States Department of Energy.

A smart grid for use with an embodiment of the invention may be based on radio-frequency technologies such as narrow band, direct-sequence spread spectrum (DSSS), frequency-hopping spread spectrum (FHSS), cellular telephone networks, ZigBee, or Bluetooth. ZigBee is a specification for a suite of high-level communication protocols using small, low-power digital radios based on the IEEE 802.15.4-2006 standard, and is maintained by the ZigBee Alliance. Bluetooth is a wireless protocol for exchanging data over short distances from fixed and mobile devices.

Alternatively, a smart grid for use with an embodiment of the invention may be based on power line communication or power line carrier (PLC), also known as Power line Digital Subscriber Line (PDSL), mains communication, power line telecom (PLT), or power line networking (PLN). By PLC is meant a system for carrying data on a conductor also used for electric power transmission. In this case, the utility meter takes the form of an electricity meter, and the data is carried on the power line that connects the electricity meter with an electricity supplier. PLC standards have been published by the HomePlug Powerline Alliance, Universal Powerline Association, European Telecommunications Standards Institute, and the Institute of Electrical and Electronics Engineers (IEEE).

In a smart grid topology, the registration process is initiated automatically when the consumer inserts a smart card into the utility meter's smart card reader, allowing for a self-registration of the meter that is transparent to the consumer. Conversely, when the consumer removes the smart card from the slot, the utility meter may initiate a grace period for replacing the smart card before delivery of the utility is finally cut.

To manage the assignment of utility meters to individual consumers, the utility provider maintains a central database of all registered meters. Upon receiving the registration message transmitted in the second step 102, the utility provider adds the information contained therein to that database. Where the registration message is received in paper form, this requires capturing at least the meter identifier and customer identifier, for example, by means of an image scanner and optical character recognition (OCR). Typically, the data thus captured is imported into the database by means of batch processing, that is, the execution of a series of programs without human interaction. For instance, the captured identifiers may be accumulated in a computer file encoded in Extensible Markup Language (XML), which file is then read and imported into the database in regular intervals. Alternatively, to further integrate the end-to-end registration process, the registration message is received by the utility provider in electronic form and the database updated ad hoc without the need for paper or batch processing.

In the third step 103, the consumer receives a confirmation message from the utility provider. To allow for a seamless integration with the processing of the registration message, the utility provider generates the confirmation message automatically upon successful update of its database. In the embodiment at hand, the confirmation message is mailed in writing. However, to provide the customer with a real-time feedback, the confirmation message may be received via HTTP and presented to the customer in the form of a confirmation web page. In the case where the utility meter itself is coupled to the utility provider by means of a computer network, the confirmation message is received through this computer network and processed directly by the utility meter.

The first step 101, the second step 102, and the third step 103 jointly serve to establish a functional data connection between the utility meter and the utility provider.

In the fourth step 104, delivery of the utility is enabled, for example, by switching an electrical power circuit or opening a water or gas inlet valve. To ensure a successful registration of the utility meter before granting the consumer access to the utility, this activation is effected in response to receiving the confirmation message of the third step 103.

In the fifth step 105, to facilitate monitoring and billing by the utility provider, information on the consumption of the utility is transmitted from the utility meter to the utility provider by means of the established data connection. For example, in the case of an electricity meter, this information would comprise the amount of electrical energy supplied to the customer's residence. To allow for a real-time transmission of consumption data, the utility meter communicates that information by means of a computer network.

To allow a large number of utility meters in a geographic location to share a link to wide area network communications (wide area network = WAN), an alternative embodiment makes use of a data concentrator. By a data concentrator is meant a piece of hardware connecting a plurality of utility meters to the WAN communications infrastructure, for example, by means of a mesh topology network. In this context, the communication between a utility meter and the data concentrator is referred to as "last mile" communication and could be delivered, inter alia, using low-power radio, PLC, or other cable. The Smart Metering Operational Framework Proposals and Options, published in August 2007 by the Energy Retail Association and available on the Internet at http://www.energy-retail.org.uk, describes such a network topology. In this case, the registration message of the second step 102 and the confirmation message of the third step 103 are routed through the data concentrator. If the data concentrator is adapted to mediate different types of utilities, it is referred to as a multi-utility controller. A conventional multi-utility controller is disclosed in United States Patent No. 6,311,105 B1, entitled "Multi-Utility Energy Control System".

The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. Alternatively, the method is implemented in hardware only, e.g. making use of an ASIC. The described embodiments are to be considered in all respects only as illustrative and not restrictive. Furthermore, the order of the steps for performing the invention is not critical, and as can be understood by those skilled in the art, the order may vary without departing from the scope of the invention.

The programmable device can be any kind of device which can be programmed including e.g. any kind of computer like a server or a personal computer, an FPGA, a processor, or the like, or any combination thereof, e.g. one processor and two FPGAs.

The storage means could be any kind of data repository in any storage medium such as a CD or disk, e.g. USB memory stick or any kind of memory, e.g. at least one RAM or ROM, or the like, or any combination thereof, e.g. one ROM and two RAMs, or two disks, etc.

The software program is a set of instructions which could have been created using JAVA, C, C++, HTML, LISP, or another programming language.

## Claims

1. A method of registering a utility meter by a utility consumer, the method comprising the steps of
establishing a data connection between the utility meter and a utility provider and
enabling (104) a delivery of a utility,
**characterized in that** the utility meter is uniquely identified by means of a meter identifier and the step of establishing the data connection comprises
assembling (101) a registration message comprising the meter identifier and a customer identifier,
transmitting (102) the registration message to the utility provider, and
receiving (103) a confirmation message from the utility provider.

2. A method according to claim 1, **characterized in that** the method comprises the preliminary steps of
receiving a storage medium from the utility provider, the storage medium configured for storing the customer identifier, and
retrieving the customer identifier from the storage medium.

3. A method according to claim 2, **characterized in that**, in order to transmit (102) the registration message, the method further comprises the step of
retrieving from the storage medium a destination address of the utility provider,
wherein the registration message is transmitted (102) to the destination address.

4. A method according to claim 1, **characterized in that** the registration message is transmitted (102) from the utility meter to the utility provider.

5. A method according to claim 1, **characterized in that** the registration message is assembled (101) by means of a Hypertext Markup Language, the registration message is transmitted (102) by means of a Hypertext Transport Protocol, and the confirmation message is received (103) by means of the Hypertext Transport Protocol.

6. A utility meter comprising storage means with a software program recorded thereon, the software program comprising instructions which, when executed on the utility meter, cause the utility meter to carry out the steps of
establishing a data connection between the utility meter and a utility provider and
enabling (104) a delivery of a utility,
**characterized in that** the utility meter is uniquely identified by means of a meter identifier and the software program comprises further instructions which, when executed on the utility meter, cause the utility meter to carry out the steps of
assembling (101) a registration message comprising the meter identifier and a customer identifier,
transmitting (102) the registration message to the utility provider, and
receiving a confirmation message (103) from the utility provider.

7. A utility meter according to claim 6, **characterized in that** the utility meter comprises a smart card reader for reading the customer identifier from a smart card.

8. A utility meter according to claim 6, **characterized in that** the utility meter takes the form of a smart meter and is connected to a smart grid.

9. A utility meter according to claim 6, **characterized in that** the utility meter is configured for metering at least one of the following:
electricity,
natural gas,
fresh water, and
district heating.

10. Storage means having a software program recorded thereon, the software program comprising instructions adapted to perform, when the program is executed by a programmable utility meter, the steps of
establishing a data connection between the utility meter and a utility provider and
enabling (104) a delivery of a utility,
**characterized in that** the utility meter is uniquely identified by means of a meter identifier and the instructions are further adapted to perform the steps of
assembling (101) a registration message comprising the meter identifier and a customer identifier,
transmitting (102) the registration message to the utility provider, and
receiving (103) a confirmation message from the utility provider.
